# EUROPEAN PATENT SPECIFICATION

(11) **EP 3 018 632 B1**
(45) Date of publication and mention of the grant of the patent: **12.05.2021**
(21) Application number: 15192477.6
(22) Date of filing: 31.10.2015
(51) Int. Cl.: G06T 15/04, G06T 3/40, G06T 11/00, G03B 37/00

(54) **AUTOMATED TEXTURE MAPPING AND ANIMATION FROM IMAGES**
AUTOMATISIERTE TEXTURIERUNGSABBILDUNG UND ANIMATION AUS BILDERN
CARTOGRAPHIE DE TEXTURE AUTOMATISÉE ET ANIMATION À PARTIR D'IMAGES

(30) Priority: 04.11.2014 US 201414532683
(43) Date of publication of application: 11.05.2016
(73) Proprietor: Dassault Systèmes, 78140 Vélizy-Villacoublay (FR)
(72) Inventor: GRIMAUD, Jean-Jacques, Winchester, MA 01890 (US)
(74) Representative: Bandpay & Greuter

(56) References cited:
- WO-A1-2004/079445
- US-A1- 2008 074 648
- US-A1- 2013 113 922
- KUTHIRUMMAL S ET AL: "Multiview radial catadioptric imaging for scene capture", ACM TRANSACTIONS ON GRAPHICS ACM USA, vol. 25, no. 3, July 2006 (2006-07), pages 916-923, XP002754953, ISSN: 0730-0301
- SZELISKI RICHARD: "Image Alignment and Stitching: A tutorial", INTERNET CITATION, 10 December 2006 (2006-12-10), pages I-II, XP002521144, Retrieved from the Internet: URL:http://pages.cs.wisc.edu/~dyer/ai-qual /szeliski-tr06.pdf [retrieved on 2009-03-20]
- LENSCH H P A ET AL: "Automated texture registration and stitching for real world models", COMPUTER GRAPHICS AND APPLICATIONS, 2000. PROCEEDINGS. THE EIGHTH PACI FIC CONFERENCE ON HONG KONG, CHINA 3-5 OCT. 2000, LOS ALAMITOS, CA, USA,IEEE COMPUT. SOC, US, 3 October 2000 (2000-10-03), pages 317-452, XP010523024, DOI: 10.1109/PCCGA.2000.883955 ISBN: 978-0-7695-0868-9
- VAN DEN HENGEL A ET AL: "Hierarchical Model Fitting to 2D and 3D Data", COMPUTER GRAPHICS, IMAGING AND VISUALISATION, 2006 INTERNATIONAL CONFE RENCE ON SYDNEY, AUSTRALIA 26-28 JULY 2006, PISCATAWAY, NJ, USA,IEEE, 26 July 2006 (2006-07-26), pages 359-364, XP010934349, DOI: 10.1109/CGIV.2006.53 ISBN: 978-0-7695-2606-5

## Description

### TECHNICAL FIELD

A technical field of the invention relates to creating texture maps for 3D model representations of physical objects from photographs of a target object.

### BACKGROUND OF THE INVENTION

Many consumer products have relatively simple shapes that can be grouped into a limited number of possible generic shapes, such as boxes and cylinders. Given a consumer product of a generic shape, a digital representation of the product or object can be created with a corresponding size, shape, and look. In particular, the digital representation is created by (i) scaling one or two dimensions of a 3D model formed of the subject generic shape, and (ii) applying images of the exterior surfaces of the consumer product onto the surfaces of the 3D model. An automated method for generating such a 3D model from a calibrated 2D image of an object is disclosed in Applicant's U.S. Patent No. 8,570,343.

Known documents also include paper KUTHIRUMMAL S ET AL "Multiview radial catadioptric imaging for scene capture", ACM transactions on graphics ACM USA, vol. 25, no. 3, July 2006, pages 916-923, which discloses a class of imaging system using a camera and a curved mirror; US 2013/113922 A1 which discloses a plant image capture using a direct image and a mirror image of the plant; WO 2004/079445 A1 which discloses a method for merging photographic images, and US 2008/074648 A1 which discloses an apparatus and a method for rendering possible the 3D acquisition of objects with the aid of an optical 3D sensor.

Unlike the general size and shape of consumer products, the textures and appearance of a product are typically unique to each individual product to sufficiently distinguish that individual product from any other. To create an accurate digital representation of a product, the textures of the product must be captured and applied to a corresponding 3D model, a process known as texture mapping. Typically, to generate a texture map of an object (product), images of the object are captured from different angles and subsequently stitched together to form a 2D texture map having a shape matching the surfaces of the corresponding 3D model. Given that many retailers of consumer goods have unique product counts beyond one million, creating digital representations of their inventory involves acquiring and generating texture maps for each DSY.00284.EP1-2019.10.03-OA1-DESC-replacement_pp1 product, a task which has the potential to be extremely labor intensive. There exists a need for obtaining texture maps of real-world objects (e.g., products) and putting the texture maps into a digital form as a 3D representation of the object at a low cost and high volume.

### SUMMARY OF THE INVENTION

The present invention provides a method for creating texture maps for 3D models of objects from images of the objects according to claim 1. Embodiments of the method are also provided according to dependent claims 2 to 10. The invention also provides a system according to claim 11 and a computer program according to claim 12.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 is a schematic view illustrating a three-mirror image capture system of the present invention in accordance with aspects of the disclosed embodiment.
FIG. 2 is a schematic view illustrating an image capture system with baffles in accordance with aspects of the disclosed embodiment.
FIGS. 3A-3B are illustrations of an object and resulting image capture by a three-mirror image capture system in accordance with aspects of the disclosed embodiment.
FIGS. 4A-4B are illustrations of keystone detection and removal in the captured image of FIG. 3B in accordance with aspects of the disclosed embodiment.
FIGS. 5A-5B are illustrations of scaling reflected image segments using mirror size and position in accordance with aspects of the disclosed embodiment.
FIGS. 6A-6B are illustrations of scaling reflected segments by object size in accordance with aspects of the disclosed embodiment.
FIGS. 7A-7B are illustrations of scaling and aligning reflected image segments in accordance with aspects of the disclosed embodiment.
FIG. 8A, 8C, and 8D are illustrations of two reflections of a common region on a target object in accordance with aspects of the disclosed embodiment.
FIG. 8B is a schematic diagram of two mirrors and their intersection line.
FIGS. 9A-9C are illustrations of overlap elimination to create a common surface in accordance with aspects of the disclosed embodiment.
FIG. 10A is an illustration of an image including the scaled and aligned reflected segments of FIG. 7B and the merged common surface of FIG. 9C in accordance with aspects of the disclosed embodiment.
FIG. 10B is an illustration of a texture map created from the image of FIG. 10A in accordance with aspects of the disclosed embodiment.
FIG. 11A is an illustration of a cylindrical object in accordance with aspects of the disclosed embodiment.
FIG. 11B is an illustration of a texture map generated by embodiments of the present invention imaging the cylindrical object of FIG. 11A.
FIG. 12A is an illustration of one of a plurality of image captures of a moving object in accordance with aspects of a three-mirror embodiment of the present invention.
FIG. 12B is a texture map and associated vectors generated from images of the moving object of FIG. 12A in accordance with aspects of the disclosed embodiment.
FIG. 12C is a 3D model and associated translation and rotation vectors of the moving object of FIG. 12A in accordance with aspects of the disclosed embodiment.
FIGS. 13A-13B are flowcharts of creating texture maps from images in accordance with aspects of the disclosed embodiment.
FIG. 14A is an example computer network deploying embodiments of the present invention.
FIG. 14B is an example computer implementing embodiments of the present invention.

### DETAILED DESCRIPTION OF THE INVENTION

A description of example embodiments of the invention follows.

Computer 3D modeling techniques have been used to build 3D packaged goods for display in interactive, 3D simulations of store interiors. In particular, 3D modeling has been used to implement the end user virtual experience of viewing a product and the/shelf context, and the virtual experience of "picking up" the product to view and read product packaging text online.

In applications where 3D models of packaged goods were built for in-store display, two strategies have been used to build 3D model content and texture map shelf or packaged goods.

The first strategy used manual creation of 3D models from photographs and product measurement information using known general purpose modeling applications. While the workflow to systematically produce larger numbers of 3D models may be planned and organized, the unit of work is still based on manual modeling of shapes and manual creation of texture maps.

A second strategy used general purpose photo-based 3D modeling applications. There exists a variety of commercially available software and approaches to solving the general problem of creating a 3D model from a physical object. Using a standard digital camera, the existing approaches capture real-world objects as fully textured 3D models.

General purpose photo-modeling of products (packaged goods) works well to produce small numbers of product models. The main limitation of this technique is that the 3D model created from multiple digital photographs requires significant manual labor to correct defects and to rescale geometry for use in online 3D applications. Limitations of existing solutions are based on the amount of manual (expert 3D artist) work required to process 3D models for use in computer applications. Because each model must be partly or completely created by hand (in a complex, general purpose 3D modeling application), any modeling workflow based on this process is not scalable.

A second problem observed with 3D models based on photo-modeling systems is irregularity of the geometric mesh. An irregular mesh makes downstream resizing/processing of models harder, and locks the workflow into a cycle of future manual editing and manual adjustment of model content.

A disadvantage of prior art is reliance on downstream editing of 3D models in the content production process. This is a problem because input data is continuously being updated with new images, and output specifications can shift due to new requirements/improvements in the online shopper experience application. Reliance on manual editing locks content production into a cycle of continued hand editing.

One strategy to address these deficiencies in the prior art is the utilization of standardized 3D models. Given a broad similarity between different products of a similar type, generic 3D models can be created to approximate the shapes of many different categories of products. These generic 3D models can be scaled based on a calibrated image of the real-world product, and individual texture maps can be applied to the scaled model to represent the product.

Prior art devices and methods for creating texture maps from real-world objects typically obtain multiple photographs of the object, where the object is repositioned between each photograph to create a complete texture map of the object when the multiple photos are stitched together to match the surface of the 3D model. Prior art systems using two photographs are the most simple and some objects, like a flat board, can be effectively photographed from only two sides. Objects of increasing volume develop disagreement between the real-world object and the texture mapped 3D model created from only two images because of distortion in the region where the two photographs are stitched together. In a two-photograph system, the distortion resulting from the shallow angle between the camera and the surface of the object is highest. And certain shapes of real-world objects, like a cube, have specific orientations, e.g., perpendicular to a face, which prevent a two image system from observing half of the object's periphery. When the object has a single principal vertical axis and when the horizontal cross-section is circular or convex, the prior art systems that use two images have distorted results. Such systems use an image from the front and one from the back. Typically the texture on the 3D model in the seams, the left and right regions of the model where the front and back images join is distorted.

Additional photographs of a real-world object improve the digital representation by enabling all surfaces to be imaged and by decreasing the distortion at the image seams due to the increase in overlap between individual images. Other prior art systems employ a rotating table or a telescoping arm with a rotating table to accurately capture multiple images of a target object. However these rotating table systems require a high degree of precision to place the target object in the center of the table, which increases the time and complexity of those systems. There exists a need for a texture mapping system that creates texture maps of objects from a single image taken from a single camera and taken without the need for precision placement of the target object in the camera's field of view.

The present system and corresponding methods disclosed herein by the Applicant captures multiple views of a target object with a single camera in a single image and creates a texture map of a 3D model having a shape similar to the shape of the target object.

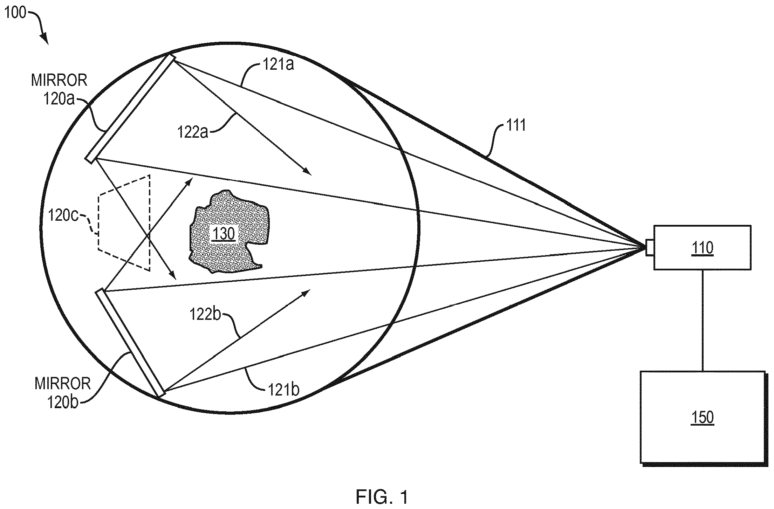

FIG. 1 is a schematic view illustrating a three-mirror image capture system embodiment of the present invention. The image capture system 100 includes a camera 110, the mirrors 120a,b,c, and an image processor 150. FIG. 1 shows the camera's 110 field of view 111 and the three mirrors 120a,b,c positioned therein (in the field of view 111 of the camera 110). More specifically, a target object 130 is positioned in the camera's field of view 111, and two mirrors 120a,b are positioned on either side of the target object 130 in the camera's field of view 111. The third mirror 120c is positioned above the target object 130. With this configuration, the camera 110 captures in a single image the front view, top view and periphery view(s) of the target object 130. The bottom surface of the target object 130 is not captured.

The mirrors 120a-b have associated fields of vision 122a-b in the camera's field of view 111. The mirrors 120a-b each reflect a portion of the periphery of the target object 130 to the camera 110. The top mirror 120c is positioned to reflect a view to the camera 110 that includes the top surface of object 130.

In operation, the camera's field of view 111 allows the camera 110 to capture together a front image of the object 130 and two reflected images 121a-b of the object 130 from mirrors 120a and 120b. A third reflected image (not shown) is provided to camera 110 by top mirror 120c, enabling a top surface of the object 130 to be visible in the camera's field of view 111. Thus the camera 110 captures in a single digital image (of field of view 111) a direct view of object 130 and the three reflected views of object 130.

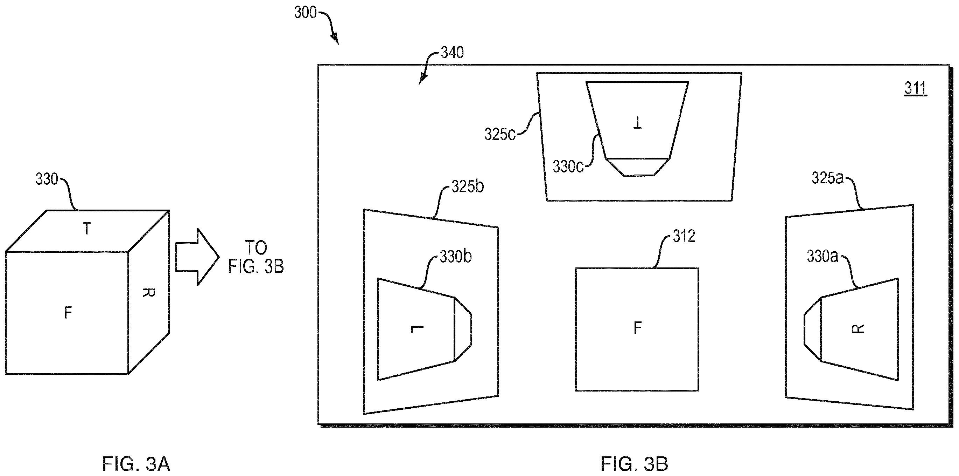

The image processor 150 is coupled to receive the digital image from camera 110. The captured digital image (i.e., the image of the field of view 111) is output by camera 110 and received as input by the image processor 150. Subsequently and as detailed in FIGS. 3-11, the image processor 150 creates a texture map of the object 130.

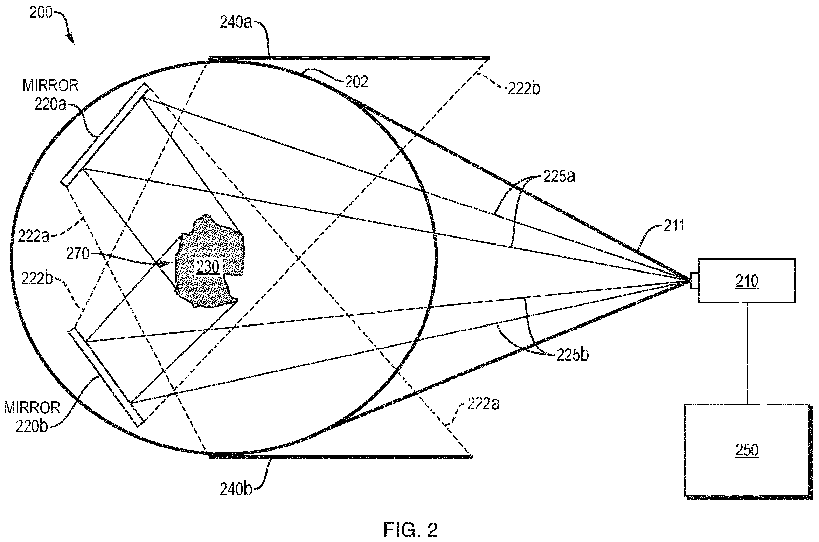

FIG. 2 is a schematic view illustrating an image capture system with baffles. FIG. 2 shows an image capture system 200 employing two mirrors 220a-b in a camera's 210 field of view 211 to create a single image (300 of FIG. 3B) that includes a front view and reflected views 225a-b of a target object 230. In the illustrated image capture system 200, a camera 210 faces a target object 230 to be textured. The target object 230 may be placed on a surface 202. The two mirrors 220a-b may be positioned on the surface 202 behind the target object 230 at known angles, and each mirror 220a-b sends a reflected view 225a-b of the target object 230 to the camera 210 without interfering with a direct view of the front of the target object 230 visible to the camera 210 in the field of view 211. Each reflected view 225a,b provides a portion of the back and respective side of the target object 230 to camera 210. The camera 210 captures an image (shown in FIG. 3B) of the field of view 211 and provides the image to an image processor 250 to create the texture map of the object 230.

Because the mirrors 220a-b reflect a wider view than the reflected views 225a-b of target object 230, the dashed lines (shown as mirror fields of view 222a-b) represent the maximum angle of reflection (and hence entire view) of each mirror 220a-b. Two white baffles 240a-b simplify the field of view 211 imaged by the camera 210. If a third mirror (not shown) is used in the back above the top of the object 230, the third mirror reflects an image of the top and a portion of the back of the target object 230 without interfering with the front image of the target object 230. The two baffles 240a-b are positioned in the fields of view 222a-b of mirrors 220a-b to create a background around the mirrors' 220a-b reflected views 225a-b in the camera's 210 field of view 211. The baffles 240a-b improve detection of the reflected views 225a-b in the field of view 211 by providing, for example, a featureless surface of a uniform color distinct from any found on the target object 230. In turn, this enables the image processor 250 to easily identify the target object 230 in the captured image from camera 210.

Because the position of the camera 210 relative to the mirrors 220a-b is fixed and known, each pixel in the image captured by camera 210 corresponds to a point either located on a known incident ray, e.g., in reflected views 225a-b, from the target object 230 to the mirror 220a-b or on the surface of the target object 230. There is an overlap 270 between the images of the mirrors 220a-b, such that a portion of the target object 230 is represented twice at the juncture of two reflected views 225a-b. This enables the textures of the target object 230 to be continuously wrapping a corresponding 3D model of similar shape. In addition, because the mirrors 220a-b see only a projection of the target object 230, the overlap 270 tends to show edges which do not necessarily exist. The surface of the target object 230 in the overlap region 270 between the two reflected views 225a-b of the mirrors 220a-b is at the intersection of the incident rays on these two mirrors 220a-b. The image processor 250 can determine overlaps 270 and the overlap with the best definition may be selected for the texture map. Fixed positions of the camera 220 and mirrors 220a-b enable a 3D shape of the target object 230 to be determined in the overlap region 270. This detected 3D shape may be used to scale and apply an affine function from a corresponding generic 3D model shape of the target object 230. Any depth of field issues are addressed by using a camera lens (not shown) set to an aperture small enough to focus both the target object 230 and the mirror's 220a-b reflected views 225a-b in the field of view 211.

The distance from the target object 230 to the camera is not critical because that distance can be deduced from a known measurement of the object, such as the object's height or width. In other words, the position of the target object 230 relative to the camera 210 can be approximated from the known measurements. Additionally, the orientation of the target object 230 relative to the camera 210 is not critical, because the image processor 250 adjusts the generated texture map based on the surface of the corresponding generic 3D model. Advantageously, compared to prior art systems with turn tables requiring an object to be positioned exactly in the center of the turn table, the illustrated image capture system 200 has significantly higher tolerance of off-center placement of the target object 230.

FIGS. 3A-B are illustrations of a target object 330 and resulting image 300 captured by a three-mirror image capture system in accordance with aspects of the disclosed embodiment. FIG. 3A shows target object 330 having a cuboid shape that includes visible front (F), right (R) and top (T) faces, with non-visible left (L) and back (B) faces. The object 330 represents, for example, a box containing a consumer product or any general consumer packaging of similar shape having six sides. FIG. 3B is a digital image 300 of target object 330 taken with an image capture 100, 200 system similar to that shown in FIGS. 1 and 2 with an additional top facing mirror. The digital image 300 includes a uniform background 311 and a direct view 312 of the front face F of the object 330. In the image 300, a right mirror reflection 325a, a left mirror reflection 325b, and a top mirror reflection 325c are present around the direct view 312 of the object. The locations of the mirror reflections 325a-c correspond to the mirrors' physical locations in the camera's field of view. The right mirror reflection 325a includes a right reflected view 330a of the right (R) and back side of the target object 330. The left mirror reflection 325b includes a left reflected view 330b of the left (L) and back side of the target object 330. The top mirror reflection 325c includes a top reflected view 330c of the top (T) and back side of the target object 330. Compared to the front view 312, the reflected views 330a-c of the target object include perspective distortion and length compression from the angle of the mirrors and include scaling effects from an increase in distance to the camera.

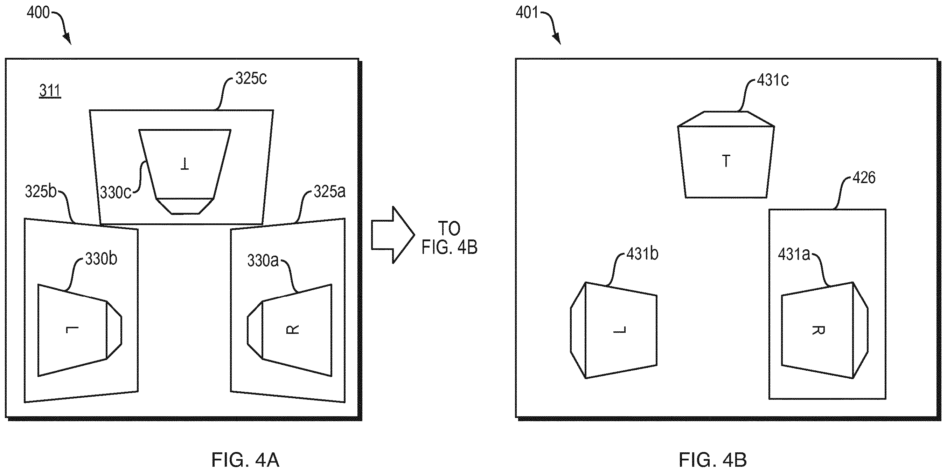

FIGS. 4A-B are illustrations of perspective correction and mirroring using the example captured image 300 of FIG. 3B in accordance with aspects of the disclosed embodiment. FIG. 4A shows a digital image 400 similar to the captured image 300 shown in FIG. 3B, but with the direct view (312 in FIG. 3B) of the front face of the target object 330 removed. The reflected views 330a-c of the target object in the respective outlined mirror reflections 325a-c include minor keystone effects, also known as keystone distortion or perspective distortion. This effect is greatly exaggerated in FIGS. 3B and 4A for purposes of illustration. Prior to image processing, the image processor 150, 250 deletes and removes the background 311 of the captured image 400 leaving only the reflected views 330a-c of the target object and the direct view (not shown) of the target object.

The keystone effect that is present in the mirror reflections 325a-c and reflected views 330a-c (or image of the object reflected by each mirror), is a result of the angle of each mirror with respect to the camera. The mirror-camera angles results in a distorted reflection of the object as received by the camera lens. For example, the reflection (reflection image 121a-b, 225a-b) of a square object by mirror 120, 220 positioned at an angle to the camera 110, 210 is in the shape of a trapezoid. The image processor 150, 250 eliminates such a perspective distortion by expanding the short side of the reflected image 121a-b, 225a-b, i.e., the edge of the mirror reflection 325a-c or reflected view 330a-c farthest from the camera, or by contracting the long side of the reflected image 121a-b, 225a-b, i.e., the edge of the mirror reflection 325a-c or reflected view 330a-c closest to the camera. In the example of FIG. 4B, image processor 150, 250 applies a perspective correction to the reflected image view 330a-c resulting in perspective distortion free images 431a-c in working digital image 401. After undoing the perspective distortion, image processor 150, 250 inverts the distortion-free images 431a-c of target object 330, e.g., left to right for the right side mirror reflections 426 (FIG. 4B). As a result, image processor 150, 250 generates the proper textures and outline of the target object 330 in working image 401.

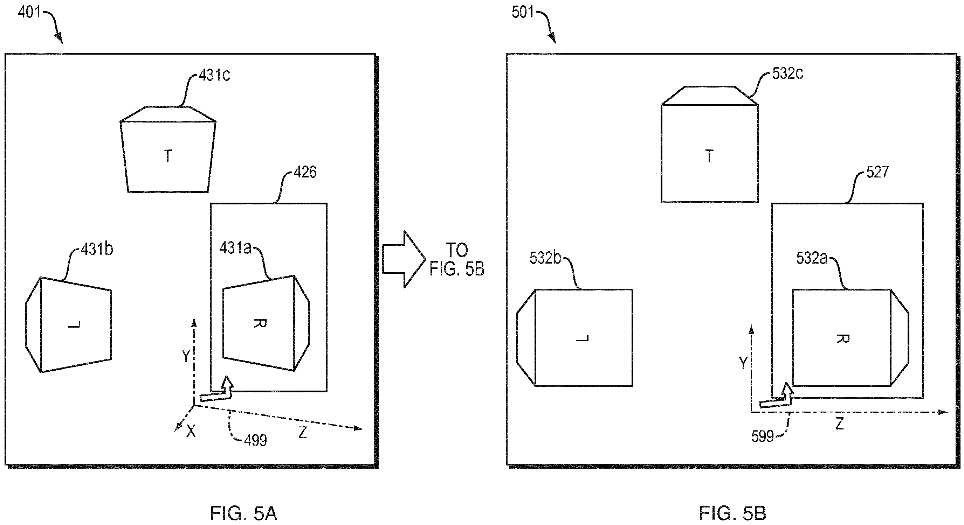

FIGS. 5A-B are illustrations of image processor 150, 250 scaling reflected image segments using mirror position in accordance with aspects of the disclosed embodiment. FIG. 5A shows the working image 401 (of FIG. 4B) with the perspective correction and mirroring applied. Because of the position of the pertinent mirror with respect to the target object 330, the mirror reflection 426 reflects the right face view 431a of the object from a position behind the target object 330. Therefore, the back surface of the target object is visible in the right face view 431a. As shown by coordinates 499 of the mirror reflection 426 in FIG. 5A, the mirror reflection 426 is oriented having (i) the field of view of the mirror reflection 426 parallel to the centerline of the field of view of the camera, and (ii) the X-Y plane perpendicular to the centerline of the field of view of the camera. Optionally, given the known position of the mirror reflection 426 with respect to the X, Y and Z axes, a mirror position adjustment can approximate the correct shape of the target object surfaces in the Y-Z plane forming the reflected view 431a of the target object. A similar correction may be applied to all reflected views 431a-c of the target object using the known positions of the mirrors. For the working image 401, the mirror position correction is appropriate because, for example, the right face of the target object is known to be approximately parallel to the Y-Z plane 599.

FIG. 5B shows a digital image 501 corresponding to working image 401 of FIG. 5A but having the mirror position adjustment correction applied to the top, right, and left reflected views 532a-c of the target object. Though this correction has incorrectly distorted the reflected view of the back of the target object in each reflected view 532a-c, the reflected views 532a-c of the right, top, and left surfaces of the target object are now approximately of a correct shape. Additionally, because a 3D space location of a surface of any overlap regions, e.g., the back surface of the target object, can be precisely determined by image processor 150, 250, any distortions in those regions can be corrected at a later stage of the process.

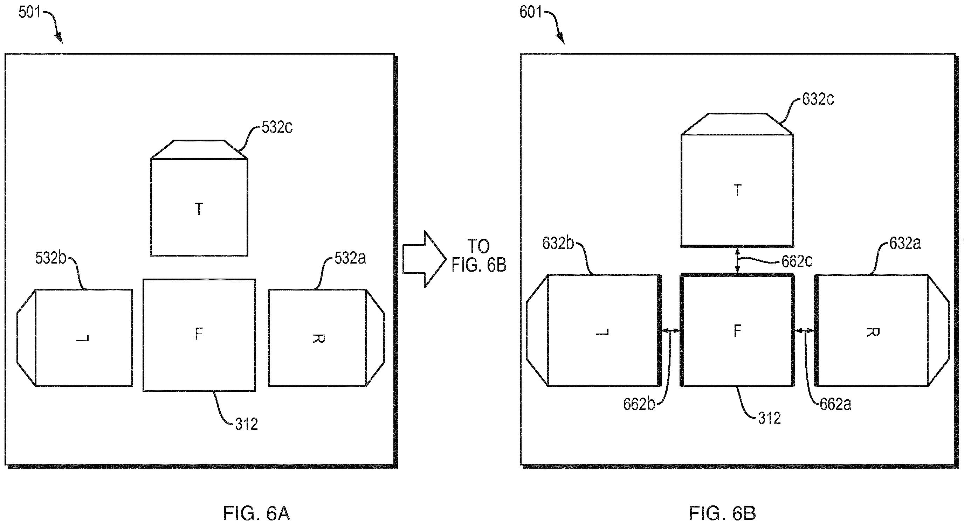

FIGS. 6A-B are illustrations of image processor 150, 250 scaling an image by object size in accordance with aspects of the disclosed embodiment. FIG. 6A shows the digital image 501 of FIG. 5B having the mirror position corrected reflected views 532a-c and also contains the direct front view 312 from FIG. 3B. The reflected views 532a-c are present in the digital image 501 as smaller than the direct front view 312, due to light traveling a farther distance from the reflected surfaces to the camera.

FIG. 6B shows a corresponding digital image 601 representing the image processor 150, 250 scaling operation based on edge detection of the reflected views 532a-c (of FIG. 6A) and the adjacent front view 312. Three adjacent detected edges 662a-c are used to scale the reflected views from 532a-c to 632a-c by the size of the adjacent edge on the direct front view 312. This operation is appropriate when no overlap regions are detected between the direct front view 312 and the adjacent reflected views 532a-c. With no overlap regions present, the target object correctly contains edge pairs 662a-c or, otherwise, gaps exist between the resultant reflected views 632a-c and the direct front view 312. However, the presence of gaps can be determined by comparing similarity of the edge pairs 662a-c, i.e., if the members of edge pair 662a are similar and can be aligned, than they have a high likelihood of being representative of real edges on the target object and the reflected views 632a-c are properly scaled by the size of the adjacent edge 662a in the direct font view 312 as shown.

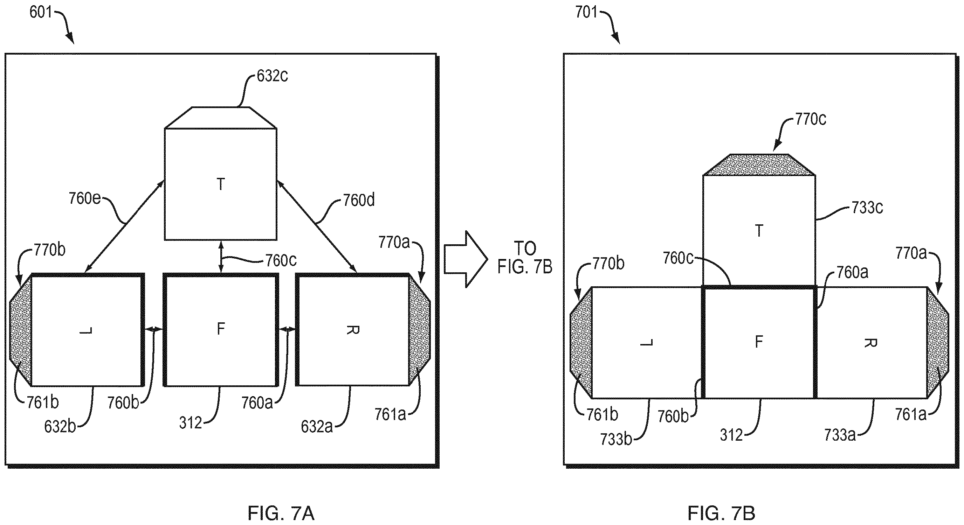

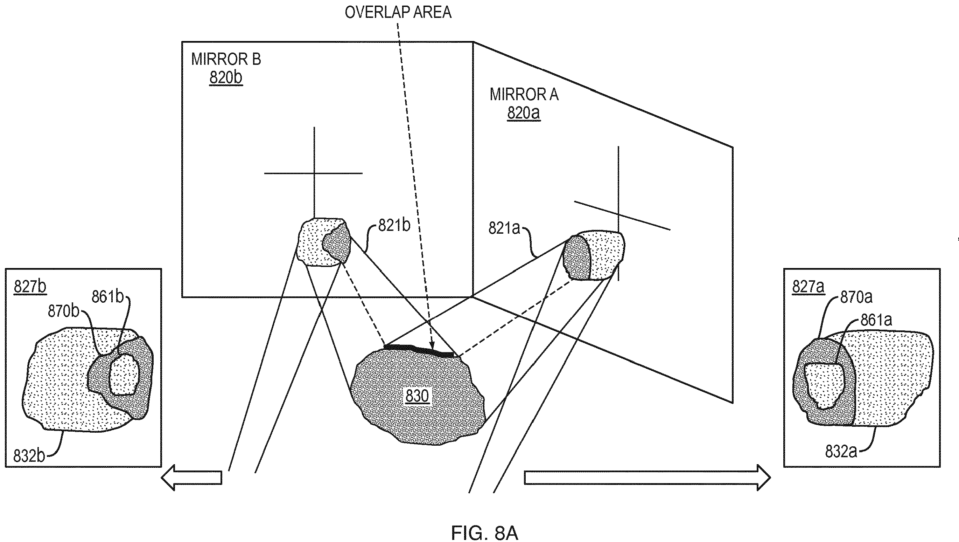

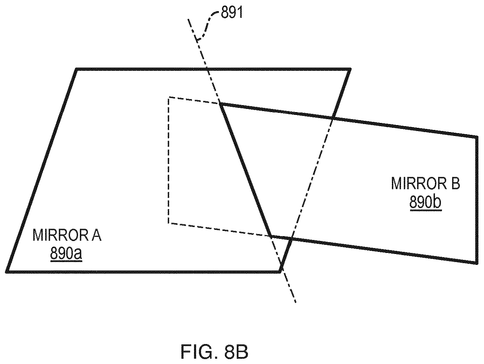

FIGS. 7A-7B illustrates image processor 150, 250 scaling and aligning reflected views in a working image 501, 601 in accordance with aspects of the disclosed embodiment. FIG. 7A shows the digital image 601 of FIG. 6B with overlap detection processing by image processor 150, 250. Image processor 150, 250 detects the edge pairs 662a-c (of FIG. 6B) as common region lines 760a-c of FIG. 7A. Common region lines are image segments, possibly only one pixel thick, that appear to represent identical parts of the target object in two or more image segments (also referred to as reflected views 632a-c and direct view 312 of the target object), though they may have different scaling or distortion. Accordingly, given the known position of the top reflected view 632c, image processor 150, 250 detects perpendicular common region lines 760d-e. The right reflected view 632a and the left reflected view 632b contain reflected views of the back of the target object 770a-b, and in these regions image processor 150, 250 detects a corresponding pair of common regions 761a-b, as further explained below in FIGs. 8A and 8B. The presence of the detected common regions 761a-b flags the surrounding image segments/reflected views 632a-b as possible overlap regions which may require trimming.

FIG. 7B shows digital image 701 in which image processor 150, 250 uses overlap edges 760a-c to align the reflected views 733a-c (from reflected views 632a-c of working image 601) with the direct front view 312 of the target object. Image processor 150, 250 stitches the reflected views 733a-c and the direct front view 312 together along their common edges 760a-c to create a single working image 701. The resultant working image 701 represents the entirety of the target object visible in the digital image but containing common regions 761a-b which each reflect a view of the same region of the target object seen from both of two or more perspectives.

FIG. 8A is an illustration of two reflections of a common region on a target object in accordance with aspects of the disclosed embodiment. Overlap elimination is handled automatically by the disclosed image processing technique. The position of the camera (110 in FIG. 1) and the camera's sensor relative to the mirrors (120a-b in FIG. 1) are fixed and known, including the yaw and pitch of each mirror with respect to the camera. The camera position and reflective mirror position and orientation are set independent of the target object. For a given mirror, any point within the field of view 111 (in FIG. 1) of the camera 110 corresponds to a point located on an incident ray 122a-b (in FIG. 1) from the object 130 (of FIG. 1) to the mirror. The position and orientation of that ray is known because the fixed positions of the camera 110 and mirrors 120a-b. If a reflected ray 121a-b (in FIG. 1) from the camera to the mirror is reflected using the associated mirror, the incident ray 122a-b ray is entirely defined by the position and orientation of the camera relative to the associated mirror. A ray, starting from a pixel on the CCD of the camera 110 (of FIG. 1) through the lens, will hit the associated mirror 120a-b which will reflect the single uniquely defined incident ray. This is true for each pixel of the reflected image (121a-b) from each specific mirror in the camera's field of view.

The potential overlap zone 270 (in FIG. 2), between any two mirrors 220a-b is fixed and can be determined by the geometrical constraints of the camera and mirror positions. When reflected views 225a-b (of FIG. 2) of two mirrors overlap in the coverage of the object, the image point corresponding to the surface of the object in the overlap 270 is the intersection of the incident rays on the two mirrors. The following two cases can occur.

In the first intersection case, shown in FIG. 8A, two mirrors 820a-b have reflections 827a-b, each containing reflected view 832a-b of a common region 861a-b on the surface of an object 830. In other words, the reflections of the mirrors 820a-b intersect at least one point on the surface of the target object 830 visible to the camera (not shown). The position in 3D space of the intersection point is determinable by geometric constraints, where the second mirror 820b reflects a portion of the same points as the first mirror 820a, as explained above.

And in the second intersection case, two or more mirrors do not reflect any point in common on the surface of the object. If, for example, one of the mirrors is occluded by an asperity of the object which prevents the mirror from seeing the same point seen by the other mirror. The rays of the views of the mirrors may intersect, but not on the surface of the object.

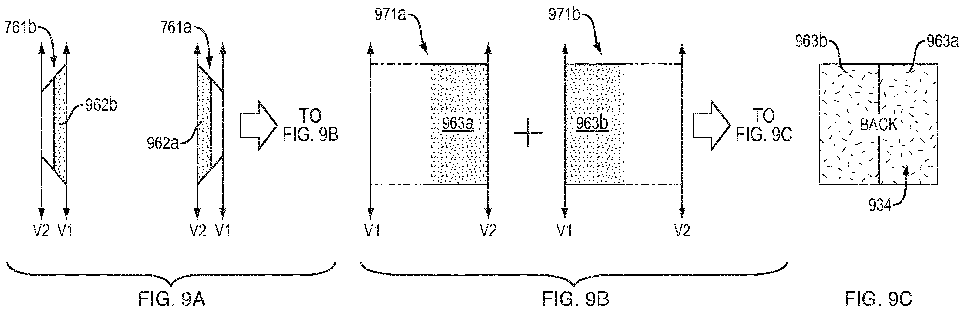

As a result, an overlap zone between two or more mirrors has two possible types of regions. The first region type, the common region 861a-b, is created from the first intersection case. The first region type is where the two mirrors 820a-b, from the viewpoint of the camera, reflect the same points, or common region 861a-b, from the surface of the target object 830. The common region 861a-b is created entirely by points on the surface of the target object 830 satisfying the first intersection case as explained above. The 3D shape of the target object 830 and that of the common region 861a-b are precisely determinable. Common regions 861a-b may be useful to scale and apply an affine function to the generic shape of the corresponding 3D model of the object. Additionally, only one of the reflected views 832a-b of the overlap region 870a-b of the target object 830 may be selected for the texture map. Typically, image processor 150, 250 selects the larger of the two representations because the larger images of the common region 861a-b represent a higher resolution view of the visible object surface. In some cases, as shown later in FIG. 9A, portions of the common region 861a-b are selected from both reflected views 832a-b based on resolution.

The second region type, the overlap regions 870a-b, are created when portions of the field of view 821a of Mirror A 820a contain a different view than corresponding portions of the same regions as seen in Mirror B's 820b field of view 821b. This situation can result from, for example, reflections present on the object surface, occlusions, angular differences between the two mirrors 820a-b, or other situations which prevent the object surface regions from being detected as being the same surface as seen from different mirror positions. Generally, overlap regions 870a-b are areas of the target object 830 reflected by both mirrors 820a-b, but having areas not detected as a common region 861a-b. Image processor 150, 250 may retain overlap regions 870a-b from only one of the two mirrors 820a-b for the texture map. Image processor 150, 250 may make this selection based on location of the overlap regions 870a-b with respect to a mirror intersection, as explained below, or other parameters that may improve the quality of a resulting texture map, for example, eliminating reflections or highlights due to lighting.

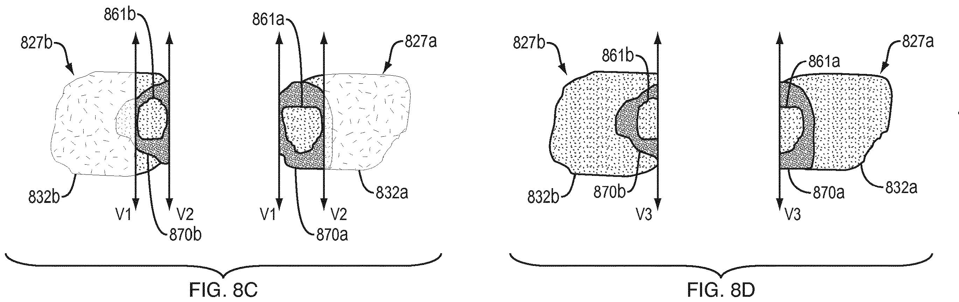

FIG. 8B is a diagram of two mirrors and their intersection line. FIG. 8B illustrates two mirrors projections 890a-b intersecting and defining a mirror intersection line 891 at the intersection of their projections 890a-b. In this example, the mirror projections 890a-b and their intersection 891 are represented as a 2D projection, for example, according to the orientations of the mirrors in a camera's field of view (not shown). Though two mirror projections 890a-b may intersect in a three-dimensional manner, the orientation of any 2D slice of their intersection with respect to a fixed plane, for example, a camera's field of view is constant. The orientation of the mirror intersection line 891 in a camera's field of view may be used to trim overlap regions 870a-b (of FIG. 8A), from multiple reflected views 832a-b of a target object 830, in order to reduce the complexity of subsequent image processing as shown in FIGS. 8C and 8D.

Generally, two example embodiments of overlap elimination, merging and stitching, are shown in FIGS. 8C and 8D, respectively. FIG. 8C shows the two mirror reflections (images) 827a-b of a target object 830 having both overlap regions 870a-b and common regions 861a-b. Two trimming lines VI, V2 are placed on opposite sides of the common regions 861a-b and oriented about the mirror intersection line (not shown). Image processor 150, 250 may delete or retain (shown as faded lines) image data outside of the trimming lines VI, V2 in the reflected view 832a-b for integration into the texture map to reduce the complexity of subsequent image processing. For image data between the trimming lines VI, V2, the image processor 150, 250 reshapes the common regions 861a-b into two equally sized regions by their determinable 3D parameters and subsequently merges the resized regions based on their image quality, resolution, or other parameters. The overlap regions 870a-b by definition lack the ability to have their 3D parameters determined, but may still be selectively trimmed by a third trimming line V3 shown in FIG. 8D. Image processor 150, 250 selectively trims the overlap regions 870a-b based on their image quality, or other parameters, such as, for example, the presence of reflections.

FIG. 8D shows the two reflection images 827a-b of target object 830 having both overlap regions 870a-b and common regions 861a-b. A single trimming line V3 may be placed bisecting the common regions 861a-b. Using the determinable 3D parameters of the common regions 861a-b, image processor 150, 250 can place the trimming line V3 in the same position in both reflection images 827a-b. Image processor 150, 250 deletes image data outside of the trimming line V3 to avoid duplications, and the placement of the trimming line V3 may be based on, for example, resolution or image quality of the common regions 861a-b or the overlap regions 870a-b, or other parameters.

Reflections of more complex target object surfaces may have overlap regions containing more than a common region 861a-b and it is therefore possible for overlap regions 870a-b (of FIG.8C) alone to be present between the trimming lines VI, V2 that do not entirely contain common regions 861a-b. Retaining data from overlap regions 870a-b in a texture map may be determined using a single trimming line V3 as shown in FIG. 8D.

FIGS. 9A-9C illustrate overlap elimination to create a joined surface in accordance with aspects of the disclosed embodiment. FIG. 9A shows the common regions 761a-b detected in FIG 7B with two trimming lines VI, V2 oriented parallel to the intersection of the mirrors reflecting the common regions 761a-b. The trimming lines VI, V2 are placed on opposite sides of the common regions 761a-b and denote where the surrounding image data has been removed to process the common regions 761a-b. As shown in FIG. 7B, the overlap regions 770a-b are entirely comprised of the common regions 761a-b as a result of the cubic shape of the target object. Continuing with FIG. 9A, image data outside of the trimming lines VI, V2 may be removed by the image processor 150, 250, as shown, to reduce the complexity of merging the common regions 761a-b. In the common regions 761a-b, regions of comparatively higher resolution 962a-b may be detected and flagged for retaining. The known positions of the camera and the mirrors enable the image processor 150, 250 to determine a three-dimensional surface of the common regions 761a-b and to transform the common regions 761a-b into an approximately correct geometric projection about any axis, as shown in FIG. 9B.

FIG. 9B shows the corrected common regions 971a-b of the common regions 761a-b of FIG. 9A. The corrected common regions 971a-b are corrected by a determined size and shape of the common regions 761a-b of FIG. 9A (shown in FIGS. 3A-3B to be the back surface of the target object 330). Accordingly, as explained above, corrected higher resolution segments 963a-b are retained in the corrected common regions 971a-b and joined together by image processor 150, 250 to form a complete common region in FIG. 9C. FIG. 9C shows the corrected common regions (971a-b of FIG. 9B) stitched together to form a composite image section 934. Resulting composite image section 934 represents the portion of the back face of the target object 830 visible in the left and right reflections of the original digital image (shown in FIG. 3B as digital image 300 and reflections 325a-b).

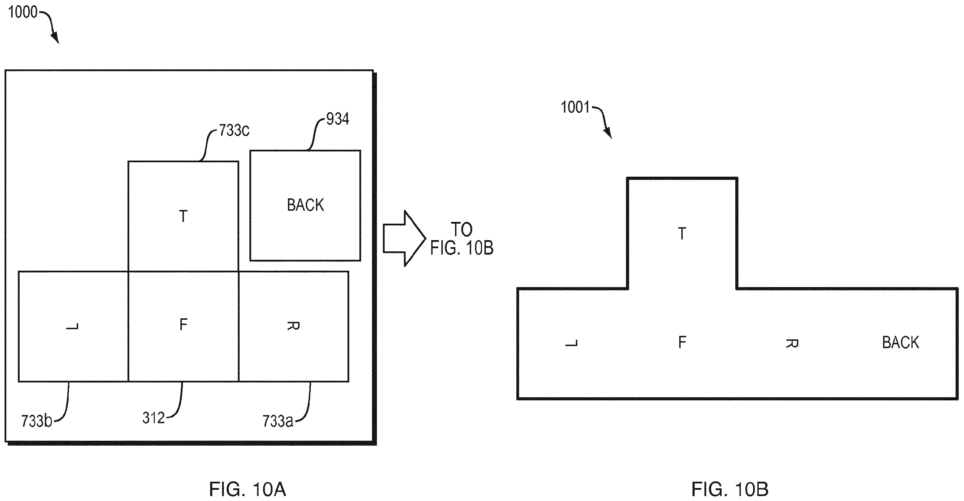

FIG. 10A is an illustration of an image having the scaled and aligned segment of FIG. 7B and the merged common surface of FIG. 9C in accordance with aspects of the disclosed embodiment. FIG. 10A shows a digital image 1000 having corrected and aligned right, top, and left reflections 733a merged with the direct front reflection 312 and containing the composite overlap region 934 from FIG. 9C. Given the known shape of the target object, for example, a cube (as shown as 330 in FIG. 3A), and a shape of a corresponding 3D model, the image segments of digital image 1000 are assembled into a texture map representing the surface of the corresponding 3-D model. FIG. 10B is an illustration of a texture map 1001 created from the working image 1000 of FIG. 10A and having five sides of a cube representing the target object (330 in FIG. 3A).

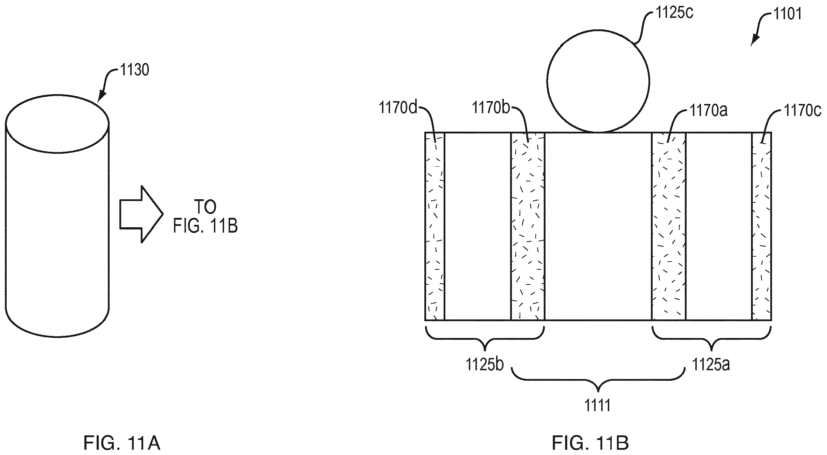

FIG. 11A shows a cylindrical object 1130 for which methods of the present invention are applied as outlined above to generate a corresponding texture map 1101 of a corresponding 3D model. FIG. 11B is an illustration of the texture map 1101 generated by embodiments of the present invention imaging the cylindrical object 1130 of FIG. 11A. Given a three-mirror system embodiment (as shown in FIG. 1), a texture map 1101 is created from a direct front view 1111, processed left, right, and top reflected views 1125a-c, and four overlap regions 1170a-d. The first overlap region 1170a is between the direct front view 1111 and the right reflected view 1125a, the second overlap region 1170b is between the direct front view 1111 and the left reflected view 1125b. The third overlap region 1170c represents a portion of overlap between the right and left views 1125a, 1125b where the image segment from the right view 1125a is retained. The fourth overlap region 1170d represents the remaining half of the overlap region between the right and left views 1125a, 1125b respectively, where the left view 1125b is retained.

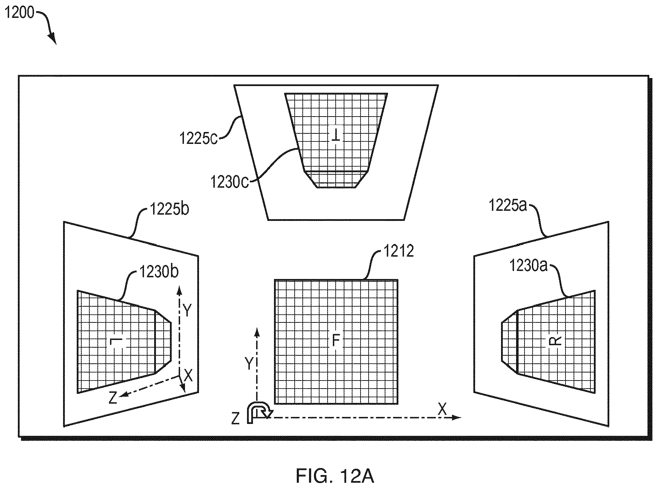

FIG. 12A is an illustration of one of a plurality of image captures by a three-mirror system of a moving object in accordance with aspects of the disclosed embodiment. When applied to animated objects or persons, the above method can be used in real time given sufficient computational resources and the resulting model transmitted to a remote location. This method will support animated objects as long as the object or objects are spatially continuous. If they are non-continuous, for example jumping from image to image in another location, a more complex determination of the nature of each object is required. If, for example, the calibrated textures maps, also referred to as atlases, of the objects are different, there may be a way to recognize which is which. If, on the contrary, the atlases of the objects are identical, it may not be feasible to distinguish which is which. In the case of a person, which case does not fall under the scope of the claims, a corresponding 3D model of a person can be selected. If the corresponding 3D model does not have the proper shape, for example, too short or too wide, the 3D model may be scaled to the images captured by the camera. Next, a calibration may be done to expose as many as possible, ideally all, the textures of the real object. Then the 3D model may be calibrated to the moving real-world object by having the real-world object move in known motions and capturing the resultant digital images and associating them with the predetermined motions. After the calibration and scaling of the 3D model is complete, new motions of the real object can be observed to animate the 3D model.

FIG. 12A shows a digital image 1200 of a cuboid target object (the cuboid target object 330 of FIG. 3A). After a texture map (1001 of FIG. 10B) of the target object has been created and associated with a corresponding 3D model (not shown), embodiments of the present invention animate the corresponding 3D model by capturing a plurality of digital images 1200 of the moving target object in a cameras field of view. In each digital image 1200, a known set of coordinates exist in the front view 1212 and in each of the reflections 1225a-c based on camera positions. Two or more of the plurality of captured digital images 1200 are analyzed to determine vectors of translation and rotation for the direct view 1212 of the target object and for each of the reflected views 1230a-c. For example, in the direct front view 1212, translations in the Y and X direction are determined and rotations in the Z axis are determined.

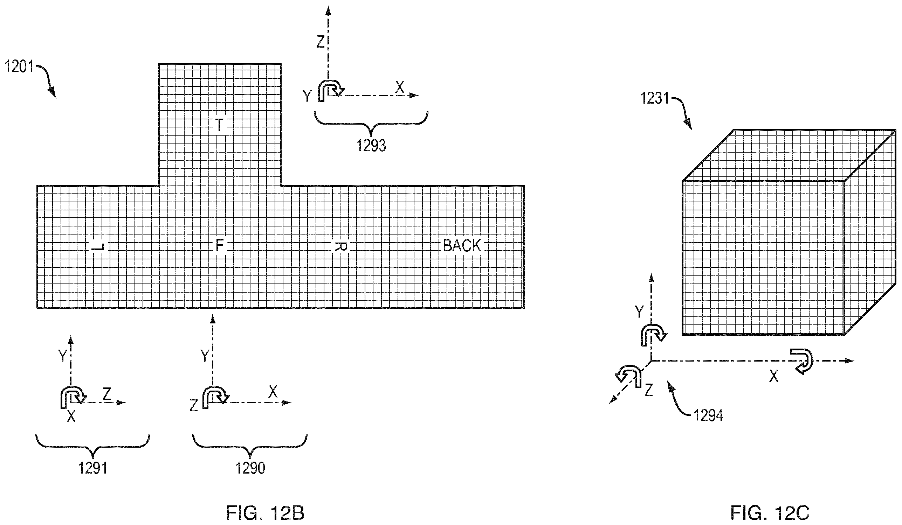

FIG. 12B is a texture map 1201 and associated vectors 1290, 1291, 1293 generated from at least two of a plurality of image captures of the moving object of FIG. 12A. FIG. 12B shows a texture map 1201 corresponding to each working digital image 1200 of FIG. 12A. For each image segment of the digital image (F, R, T, L, Back), a corresponding translation and rotation vector 1290, 1291, 1293 is calculated using vector math operations well known by those skilled in the art. FIG. 12C shows a 3D model 1231 and associated translation and rotation vectors 1294 of the moving object of FIG. 12A. From a given sequence of images 1200 taken of the target object, the corresponding translation and rotation vectors 1290, 1291, 1293 can be applied to the corresponding texture map and as a result animates the corresponding 3D model as shown in FIG. 12C in three axes of translation and rotation 1294.

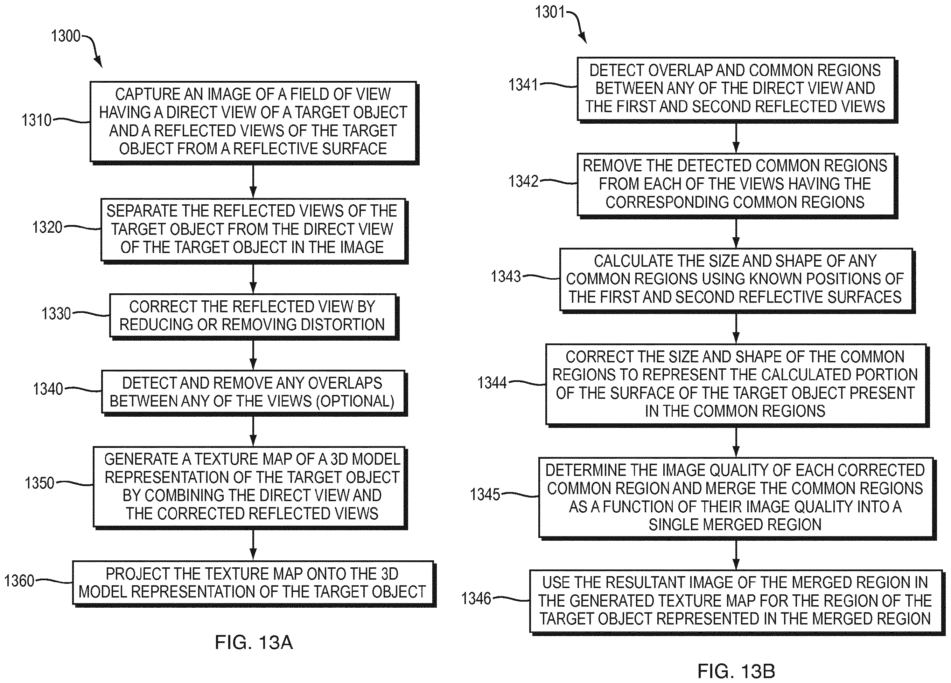

FIGS. 13A-13B are flowcharts of methods of creating texture maps from images in accordance with aspects of the disclosed embodiment. FIG. 13A is a flowchart 1300 of an example method of generating a 3D texture map from a single image of a view. In step 1310, an image of a field of view is captured by a camera. The field of view has a direct view of a target object and reflected view of the target object from a reflected surface. Next, at step 1320, the reflected views of the target object are separated from the direct view of the target object in the captured image. Next, at step 1330, the reflected views are corrected by removing distortion. Next, at step 1340, overlap between any of the views in the captured image is optionally detected and removed. At step 1350, a texture map of a 3D model representation of the target object is generated by combining the direct view and the corrected reflected views. Finally, at step 1360, the texture map is projected onto the 3D model representation of the target object.

FIG. 13B is a flowchart 1301 of an example method of step 1340, which includes detecting and removing overlap between any of the views in the captured image of step 1310 when the captured image includes at least two reflected views. In step 1341, overlap between any of the direct view and the first and second reflected views is detected, and any common regions present in any of the views is identified. Next, in step 1342, the detected common regions are separated or removed from their corresponding views. Next, in step 1343, the size and shape in 3D space (or on the target object) of any common regions are calculated using known positions of the first and second reflective surfaces. Next, in step 1344, the size and shape of the separated common regions are corrected by the calculations of step 1343 to represent a portion of the surface of the target object present in the common regions. Next, in step 1345, the image quality of each detected common region is determined and the common region is merged as a function of their image quality into a single merged region. Finally, in step 1346, the merged common region is used in step 1350 to generate a texture map of the region of the target object corresponding to the common region.

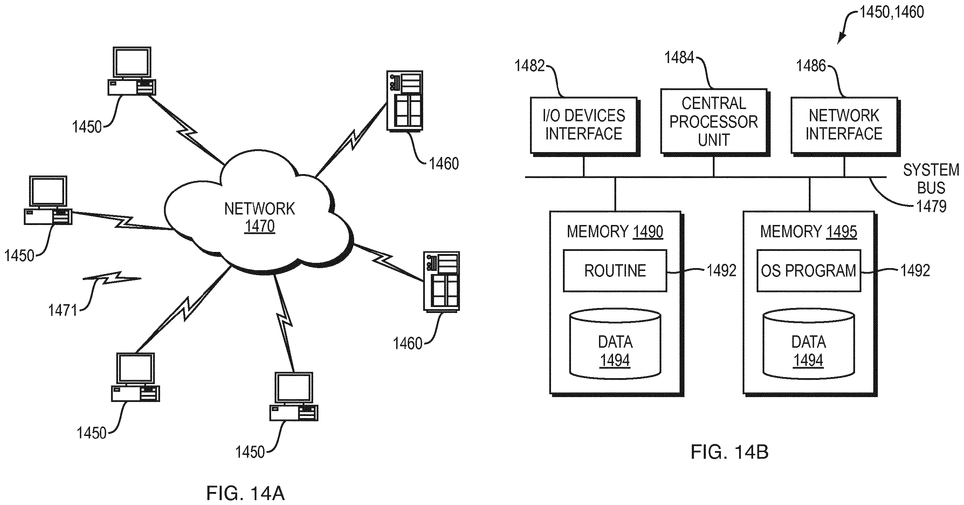

FIG. 14A illustrates a computer network or similar digital processing environment in which embodiments of the present invention may be deployed. Client computer(s)/devices 1450 and server computer(s) 1460 provide processing, storage, and input/output devices executing application programs and the like. Client computer(s)/devices 1450 can also be linked through communications network 1470 to other computing devices, including other client devices/processes 1460 and server computer(s) 1450. Communications network 1470 can be part of a remote access network, a global network (e.g., the Internet), a worldwide collection of computers, Local area or Wide area networks, and gateways that currently use respective protocols (TCP/IP, Bluetooth, *etc.)* to communicate with one another. Other electronic device/computer network architectures are suitable.

FIG. 14B is a block diagram of the internal structure of a computer (e.g., client processor/device 1450 or server computers 1460 of FIG. 14A) in which various embodiments of the present invention may be implemented, such as the example method/computer routine 1300, 1301 of FIGS. 13A-B and the example image processing apparatus 150, 250 of FIGS. 1-2. Each computer 1450,1460 contains system bus 1479, where a bus is a set of hardware lines used for data transfer among the components of a computer or processing system. Bus 1479 is essentially a shared conduit that connects different elements of a computer system (e.g., processor, disk storage, memory, input/output ports, network ports, *etc.)* that enables the transfer of information between the elements. Attached to system bus 1479 is I/O device interface 1482 for connecting various input and output devices (*e.g.,* keyboard, mouse, displays, printers, speakers, *etc*.) to the computer 1450, 1460. Network interface 1486 allows the computer to connect to various other devices attached to a network (e.g., network 1470 of FIG. 14A). Memory 1490 provides volatile storage for computer software instructions 1492 and data 1494 used to implement the methods/routines 1300, 1301 and image system processor 150, 250 detailed above. Disk storage 1495 provides non-volatile storage for computer software instructions 1492 and data 1494 used to implement an embodiment of the present invention. Central processor unit 1484 is also attached to system bus 1479 and provides for the execution of computer instructions.

In one embodiment, the processor routines 1492 and data 1494 are a computer program product (generally referenced 1492), including a computer readable medium (*e.g.*, a removable storage medium such as one or more DVD-ROM's, CD-ROM's, diskettes, tapes, *etc.)* that provides at least a portion of the software instructions for the invention system. Computer program product 1492 can be installed by any suitable software installation procedure, as is well known in the art. In another embodiment, at least a portion of the software instructions may also be downloaded over a cable, communication and/or wireless connection. In other embodiments, the invention programs are a computer program propagated signal product 1471 embodied on a propagated signal on a propagation medium (*e.g*., a radio wave, an infrared wave, a laser wave, a sound wave, or an electrical wave propagated over a global network such as the Internet, or other network(s)). Such carrier medium or signals provide at least a portion of the software instructions for the present invention routines/program 1492.

In alternate embodiments, the propagated signal is an analog carrier wave or digital signal carried on the propagated medium. For example, the propagated signal may be a digitized signal propagated over a global network (*e.g*., the Internet), a telecommunications network, or other network. In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of computer program product 1492 is a propagation medium that the computer system 1460 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium and the like.

Further, the present invention may be implemented in a variety of computer architectures. The computer of FIGS. 14A and 14B are for purposes of illustration and not limitation of the present invention.

It should be understood that the block diagrams and flow charts may include more or fewer elements, be arranged differently, or be represented differently. It should be understood that implementation may dictate the block/flow/network diagrams and the number of block/flow/network diagrams illustrating the execution of embodiments of the invention.

It should be understood that elements of the block diagrams and flow charts described above may be implemented in software, hardware, or firmware. In addition, the elements of the block/flow/network diagrams described above may be combined or divided in any manner in software, hardware, or firmware. If implemented in software, the software may be written in any language that can support the embodiments disclosed herein. The software may be stored on any form of computer readable medium, such as random access memory (RAM), read only memory (ROM), compact disk read only memory (CD-ROM), and so forth. In operation, a general purpose or application specific processor loads and executes the software in a manner well understood in the art.

While this invention has been particularly shown and described with references to example embodiments thereof, it will be understood by those skilled in the art that various changes in form and details may be made therein without departing from the scope of the invention encompassed by the appended claims.

## Claims

1. A computer-implemented method comprising:
capturing an image of a field of view, the field of view having a direct view of a consumer good product and at least one reflected view of the consumer good product from at least one planar reflective surface, the captured image having a direct image of the direct view and at least one reflected image of the at least one reflected view of the consumer good product (1310),
wherein the at least one planar reflective surface includes a first planar reflective surface and a second planar reflective surface, the at least one reflected view includes a first reflected view of the consumer good product from the first planar reflective surface and a second reflected view of the consumer good product from the planar second reflective surface, and the at least one reflected image includes a first reflected image from the first reflected view and a second reflected image from the second reflected view;
scaling a generic 3D model representation of the consumer good product to the size of the consumer good product based on the captured image;
separating the at least one reflected image from the direct image in the captured image (1320);
reducing distortion from the separated reflected image to provide at least one distortion-reduced reflected image (1330), the reducing distortion comprising:
detecting at least one adjacent edge pair of the at least one separated reflected image and the direct image; and
scaling and aligning the at least one separated reflected image on the direct image based on the detected at least one adjacent edge pair;
generating a texture map from the direct image and the at least one distortion-reduced reflected image (1350); and
projecting the generated texture map onto the scaled generic 3D model representation of the consumer good product (1360),
the method further including:
detecting an overlap zone between the first reflected image and the second reflected image, the overlap zone comprising common regions in the first reflected image and the second reflected image; and
eliminating the detected overlap zone wherein the eliminating comprises resizing and merging the common regions based on at least two trimming lines oriented about a mirror intersection line defined at an intersection of projections of the first planar reflective surface and the second planar reflective surface.

2. The method of Claim 1, wherein the first and second reflected views and the direct view of the consumer good product observe at least a portion of a circumference of the consumer good product.

3. The method of Claim 1, wherein the at least one planar reflective surface further includes a third planar reflective surface, the at least one reflected view further includes a third reflected view of the consumer good product from the third planar reflective surface, and the at least one reflected image further includes a third reflected image of the third reflected view.

4. The method of Claim 3, wherein the first and second reflected views and the direct view observe at least a portion of a circumference of the consumer good product the third reflected view observes a top or bottom surface of the consumer good product.

5. The method of Claim 1, wherein detecting an overlap further includes:
detecting a common region in each of at least two of the images having the detected overlap (1341);
removing the common regions from each of the at least two of the images having the detected overlap (1342);
calculating the size and shape of the common regions using known positions of the first and second planar reflective surfaces (1343);
correcting the common regions to represent the calculated a portion of the surface of the consumer good product (1344);
determining on an image quality of each corrected common regions and merging the corrected common regions into a merged region using the determined image quality (1345); and
using the joined region in generating the at least one texture map (1346).

6. The method of Claim 1, wherein separating the at least one reflected image from the direct image of consumer good product in the captured image includes:
detecting a region of distortion in the captured image (1330); and
flagging the detected region as the at least one reflected image of the consumer good product (1330).

7. The method of Claim 1, wherein reducing distortion from the at least one reflected image includes at least one of: scaling the at least one reflected image by a size of the consumer good product, correcting perspective distortion in the at least one reflect image, and reshaping the at least one reflected image based on a position of the at least one reflected surface and a shape of the consumer good product (431).

8. The method of Claim 1, wherein capturing the image of the field of view further includes
capturing a plurality of captured images (1200) of the field of view having a consumer good product as the consumer good product moves from a first position to a second position, each resulting captured image having a direct image of the direct view of the consumer good product and at least one reflected image of the at least one reflected view of the consumer good product; and
generating a plurality of texture maps from the plurality of images.

9. The method of Claim 8, further including:
detecting movements of the consumer good product (1290, 1291, 1293);
correlating the detected movements of the consumer good product with the generic 3D model to generate corresponding movements of the generic 3D model (1294); and animating the generic 3D model from a corresponding first position to a corresponding second position based on the corresponding movements of the generic 3D model and the generated plurality of texture maps (1231).

10. The method of any of Claims 1-9, further comprising projecting the generated texture map onto a generic 3D model representation of the consumer good product.

11. A system configured for generating a texture map for a generic 3D model from a consumer good product with a single image according to the method of any of claims 1-9, the system comprising a camera (110) adapted for performing the capturing of the image and an image processing device (150, 250) adapted for receiving the captured image and performing the separating, the reducing, and the generating.

12. A computer program comprising instructions for performing the method of any of Claims 1-10.

## Patentansprüche

1. Computerimplementiertes Verfahren, Folgendes umfassend:
Erfassen eines Bildes eines Sichtfeldes, wobei das Sichtfeld eine Direktansicht eines Konsumgutprodukts und mindestens eine von mindestens einer ebenen reflektierenden Oberfläche reflektierte Ansicht des Konsumgutprodukts aufweist, wobei das erfasste Bild ein Direktbild der Direktansicht und mindestens ein reflektiertes Bild der mindestens einen reflektierten Ansicht des Konsumgutprodukts aufweist (1310),
wobei die mindestens eine ebene reflektierende Oberfläche eine erste ebene reflektierende Oberfläche und eine zweite ebene reflektierende Oberfläche beinhaltet, wobei die mindestens eine reflektierte Ansicht eine erste von der ersten ebenen reflektierenden Oberfläche reflektierte Ansicht des Konsumgutprodukts und eine zweite von der zweiten ebenen reflektierenden Oberfläche reflektierte Ansicht des Konsumgutprodukt beinhaltet und das mindestens eine reflektierte Bild ein erstes reflektiertes Bild von der ersten reflektierten Ansicht und ein zweites reflektiertes Bild von der zweiten reflektierten Ansicht beinhaltet,
Skalieren einer generischen 3D-Modell-Darstellung des Konsumgutprodukts auf die Größe des Konsumgutprodukts, basierend auf dem erfassten Bild,
Separieren des mindestens einen reflektierten Bildes von dem Direktbild in dem erfasst Bild (1320),
Reduzieren der Verzerrung von dem separierten reflektierten Bild, um mindestens ein verzerrungsreduziertes reflektiertes Bild bereitzustellen (1330), wobei das Reduzieren der Verzerrung Folgendes umfasst:
Erkennen mindestens eines benachbarten Randpaares des mindestens einen separierten reflektierten Bildes und des Direktbildes und
Skalieren und Ausrichten des mindestens einen separierten reflektierten Bildes an dem Direktbild, basierend auf dem erkannten mindestens einen benachbarten Randpaar,
Erzeugen eines Texturabbildes von dem Direktbild und dem mindestens einen verzerrungsreduzierten reflektierten Bild (1350) und
Projizieren des erzeugten Texturabbildes auf die skalierte generische 3D-Modelldarstellung des Konsumgutprodukts (1360),
wobei das Verfahren ferner Folgendes beinhaltet:
Erkennen einer Überlappungszone zwischen dem ersten reflektierten Bild und dem zweiten reflektierten Bild, wobei die Überlappungszone gemeinsame Bereiche in dem ersten reflektierten Bild und dem zweiten reflektierten Bild umfasst, und
Eliminieren der erkannten Überlappungszone, wobei das Eliminieren das Größenanpassen und Verschmelzen der gemeinsamen Bereiche basierend auf mindestens zwei Beschneidungslinien umfasst, die um eine Spiegelschnittlinie ausgerichtet sind, die an einem Schnittpunkt von Projektionen der ersten ebenen reflektierenden Oberfläche und der zweiten ebenen reflektierenden Oberfläche definiert ist.

2. Verfahren nach Anspruch 1, wobei die erste und die zweite reflektierte Ansicht und die Direktansicht des Konsumgutprodukts mindestens einen Abschnitt eines Umfangs des Konsumgutprodukts betrachten.

3. Verfahren nach Anspruch 1, wobei die mindestens eine ebene reflektierende Oberfläche ferner eine dritte ebene reflektierende Oberfläche beinhaltet, wobei die mindestens eine reflektierte Ansicht ferner eine dritte von der dritten ebenen reflektierenden Oberfläche reflektierte Ansicht des Konsumgutprodukts beinhaltet und das mindestens eine reflektierte Bild ferner ein drittes reflektiertes Bild der dritten reflektierten Ansicht beinhaltet.

4. Verfahren nach Anspruch 3, wobei die erste und die zweite reflektierte Ansicht und die Direktansicht mindestens einen Abschnitt eines Umfangs des Konsumgutprodukts betrachten, die dritte reflektierte Ansicht eine Ober- oder Unterseite des Konsumgutprodukts betrachtet.

5. Verfahren nach Anspruch 1, wobei das Erkennen einer Überlappung ferner Folgendes beinhaltet:
Erkennen eines gemeinsamen Bereichs in jedem von mindestens zwei der Bilder, welche die erkannte Überlappung aufweisen (1341),
Entfernen der gemeinsamen Bereiche von jedem der mindestens zwei der Bilder, welche die erkannte Überlappung aufweisen (1342),
Berechnen der Größe und Form der gemeinsamen Bereiche mit Hilfe bekannter Positionen der ersten und der zweiten ebenen reflektierenden Oberfläche (1343),
Korrigieren der gemeinsamen Bereiche, um den berechneten Abschnitt der Oberfläche des Konsumgutprodukts darzustellen (1344),
Bestimmen einer Bildqualität jedes korrigierten gemeinsamen Bereichs und Verschmelzen der korrigierten gemeinsamen Bereiche zu einem verschmolzenen Bereich mit Hilfe der bestimmten Bildqualität (1345) und
Verwenden des verbundenen Bereichs beim Erzeugen des mindestens einen Texturabbildes (1346).

6. Verfahren nach Anspruch 1, wobei das Separieren des mindestens einen reflektierten Bildes von dem Direktbild des Konsumgutprodukts in dem erfasst Bild Folgendes beinhaltet:
Erkennen eines Bereichs einer Verzerrung in dem erfassten Bild (1330) und
Markieren des erkannten Bereichs als das mindestens eine reflektierte Bild des Konsumgutprodukts (1330).

7. Verfahren nach Anspruch 1, wobei das Reduzieren der Verzerrung des mindestens einen reflektierten Bildes mindestens eines des Folgenden beinhaltet: Skalieren des mindestens einen reflektierten Bildes um eine Größe des Konsumgutprodukts, Korrigieren der perspektivischen Verzerrung in dem mindestens einen reflektierten Bild und Neugestalten des mindestens einen reflektierten Bildes basierend auf einer Position der mindestens einen reflektierten Oberfläche und einer Form des Konsumgutprodukts (431).

8. Verfahren nach Anspruch 1, wobei das Erfassen des Bildes des Sichtfeldes ferner Folgendes umfasst:
Erfassen mehrerer erfasster Bilder (1200) des Sichtfeldes, das ein Konsumgutprodukt aufweist, während sich das Konsumgutprodukt von einer ersten Position zu einer zweiten Position bewegt, wobei jedes entstehende erfasst Bild ein Direktbild der Direktansicht des Konsumgutprodukts und mindestens ein reflektiertes Bild der mindestens einen reflektierten Ansicht des Konsumgutprodukts aufweist, und
Erzeugen mehrerer Texturabbilder aus den mehreren Bildern.

9. Verfahren nach Anspruch 8, ferner Folgendes beinhaltend:
Erkennen von Bewegungen des Konsumgutprodukts (1290, 1291, 1293),
Korrelieren der erkannten Bewegungen des Konsumgutprodukts mit dem generischen 3D-Modell, um entsprechende Bewegungen des generischen 3D-Modells zu erzeugen (1294), und
Animieren des generischen 3D-Modells von einer entsprechenden ersten Position zu einer entsprechenden zweiten Position, basierend auf den entsprechenden Bewegungen des generischen 3D-Modells und den generierten mehreren Texturabbildern (1231).

10. Verfahren nach einem der Ansprüche 1 bis 9, ferner das Projizieren des erzeugten generierten Texturabbildes auf eine generische 3D-Modelldarstellung des Konsumgutprodukts.

11. System, konfiguriert zum Erzeugen eines Texturabbildes für ein generisches 3D-Modell von einem Konsumgutprodukt mit einem Einzelbild gemäß dem Verfahren nach einem der Ansprüche 1 bis 9, wobei das System eine Kamera (110) umfasst, die zum Ausführen der Erfassung des Bildes eingerichtet ist, und eine Bildverarbeitungsvorrichtung (150, 250), die zum Empfangen des erfassten Bildes und zum Ausführen des Separierens, des Reduzierens und des Erzeugens eingerichtet ist.

12. Computerprogramm, Befehle zum Ausführen des Verfahrens nach einem der Ansprüche 1 bis 10 umfassend.

## Revendications

1. Procédé mis en œuvre par ordinateur, comprenant les étapes ci-dessous consistant à :
capturer une image d'un champ de vision, le champ de vision présentant une vue directe d'un produit de consommation et au moins une vue réfléchie du produit de consommation provenant d'au moins une surface réfléchissante plane, l'image capturée présentant une image directe de la vue directe et au moins une image réfléchie de ladite au moins une vue réfléchie du produit de consommation (1310) ;
dans lequel ladite au moins une surface réfléchissante plane inclut une première surface réfléchissante plane et une deuxième surface réfléchissante plane, ladite au moins une image réfléchie inclut une première image réfléchie du produit de consommation provenant de la première surface réfléchissante plane et une deuxième image réfléchie du produit de consommation provenant de la deuxième surface réfléchissante plane, et ladite au moins une image réfléchie inclut une première image réfléchie provenant de la première image réfléchie et une deuxième image réfléchie provenant de la deuxième image réfléchie ;
mettre à l'échelle une représentation de modèle 3D générique du produit de consommation, à la taille du produit de consommation, sur la base de l'image capturée ;
séparer ladite au moins une image réfléchie de l'image directe dans l'image capturée (1320) ;
réduire une distorsion de l'image réfléchie séparée en vue de fournir au moins une image réfléchie à distorsion réduite (1330), l'étape de réduction de la distorsion comprenant les étapes ci-dessous consistant à :
détecter au moins une paire de bords adjacents de ladite au moins une image réfléchie séparée et de l'image directe ; et
mettre à l'échelle et aligner ladite au moins une image réfléchie séparée sur l'image directe, sur la base de ladite au moins une paire de bords adjacents détectée ;
générer une carte de texture à partir de l'image directe et de ladite au moins une image réfléchie à distorsion réduite (1350) ; et
projeter la carte de texture générée sur la représentation de modèle 3D générique mise à l'échelle du produit de consommation (1360) ;
le procédé incluant en outre les étapes ci-dessous consistant à :
détecter une zone de chevauchement entre la première image réfléchie et la deuxième image réfléchie, la zone de chevauchement comprenant des régions communes dans la première image réfléchie et la deuxième image réfléchie ; et
éliminer la zone de chevauchement détectée, dans lequel l'étape d'élimination comprend l'étape consistant à redimensionner et à fusionner les régions communes sur la base d'au moins deux lignes de coupe orientées autour d'une ligne d'intersection de miroir définie à une intersection de projections de la première surface réfléchissante plane et de la deuxième surface réfléchissante plane.

2. Procédé selon la revendication 1, dans lequel les première et deuxième vues réfléchies et la vue directe du produit de consommation observent au moins une partie d'une circonférence du produit de consommation.

3. Procédé selon la revendication 1, dans lequel ladite au moins une surface réfléchissante plane inclut en outre une troisième surface réfléchissante plane, ladite au moins une vue réfléchie inclut en outre une troisième vue réfléchie du produit de consommation provenant de la troisième surface réfléchissante plane, et ladite au moins une image réfléchie inclut en outre une troisième image réfléchie de la troisième vue réfléchie.

4. Procédé selon la revendication 3, dans lequel les première et deuxième vues réfléchies et la vue directe observent au moins une partie d'une circonférence du produit de consommation, et la troisième vue réfléchie observe une surface supérieure ou inférieure du produit de consommation.

5. Procédé selon la revendication 1, dans lequel l'étape de détection d'un chevauchement inclut en outre les étapes ci-dessous consistant à :
détecter une région commune dans chacune d'au moins deux des images présentant le chevauchement détecté (1341) ;
supprimer les régions communes de chacune desdites au moins deux des images présentant le chevauchement détecté (1342) ;
calculer la taille et la forme des régions communes en utilisant des positions connues des première et deuxième surfaces réfléchissantes planes (1343) ;
corriger les régions communes en vue de représenter la partie calculée de la surface du produit de consommation (1344) ;
déterminer, sur une image, une qualité de chaque région commune corrigée, et fusionner les régions communes corrigées en une région fusionnée, en utilisant la qualité d'image déterminée (1345) ; et
utiliser la région fusionnée dans le cadre de l'étape de génération de ladite au moins une carte de texture (1346).

6. Procédé selon la revendication 1, dans lequel l'étape de séparation de ladite au moins une image réfléchie, de l'image directe du produit de consommation dans l'image capturée, comprend les étapes ci-dessous consistant à :
détecter une région de distorsion dans l'image capturée (1330) ; et
marquer la région détectée comme étant ladite au moins une image réfléchie du produit de consommation (1330).

7. Procédé selon la revendication 1, dans lequel l'étape de réduction de la distorsion de ladite au moins une image réfléchie inclut au moins l'une des étapes ci-après consistant à : mettre à l'échelle ladite au moins une image réfléchie selon une taille du produit de consommation, corriger une distorsion de perspective dans ladite au moins une image réfléchie, et remodeler ladite au moins une image réfléchie sur la base d'une position de ladite au moins une vue réfléchie et d'une forme du produit de consommation (431).

8. Procédé selon la revendication 1, dans lequel l'étape de capture de l'image du champ de vision inclut en outre les étapes ci-dessous consistant à :
capturer une pluralité d'images capturées (1200) du champ de vision présentant un produit de consommation, à mesure que le produit de consommation se déplace d'une première position à une seconde position, chaque image capturée résultante présentant une image directe de la vue directe du produit de consommation et au moins une image réfléchie de ladite au moins une vue réfléchie du produit de consommation ; et
générer une pluralité de cartes de texture à partir de la pluralité d'images.

9. Procédé selon la revendication 8, incluant en outre les étapes ci-dessous consistant à :
détecter des déplacements du produit de consommation (1290, 1291, 1293) ;
mettre en corrélation les déplacements détectés du produit de consommation avec le modèle 3D générique en vue de générer des déplacements correspondants du modèle 3D générique (1294) ; et
réaliser une animation du modèle 3D générique, d'une première position correspondante à une seconde position correspondante, sur la base des déplacements correspondants du modèle 3D générique et de la pluralité générée de cartes de texture (1231).

10. Procédé selon l'une quelconque des revendications 1 à 9, comprenant en outre l'étape consistant à projeter la carte de texture générée sur une représentation de modèle 3D générique du produit de consommation.

11. Système configuré de manière à générer une carte de texture pour un modèle 3D générique, à partir d'un produit de consommation avec une unique image, conformément au procédé selon l'une quelconque des revendications 1 à 9, le système comprenant une caméra (110) apte à mettre en œuvre l'étape de capture de l'image, et un dispositif de traitement d'image (150, 250) apte à recevoir l'image capturée et à mettre en œuvre les étapes de séparation, de réduction et de génération.

12. Programme informatique comprenant des instructions pour mettre en œuvre le procédé selon l'une quelconque des revendications 1 à 10.
